# EUROPÄISCHE PATENTSCHRIFT

(11) **EP 2 134 648 B1**
(45) Veröffentlichungstag und Bekanntmachung des Hinweises auf die Patenterteilung: **24.08.2016**
(21) Anmeldenummer: 08716649.2
(22) Anmeldetag: 20.03.2008
(51) Int. Cl.: C01B 17/16, C01B 17/76

(54) **VERFAHREN ZUR SCHWEFELSÄUREERZEUGUNG UND ANLAGE ZUR DURCHFÜHRUNG DES VERFAHRENS**
METHOD FOR PRODUCING SULPHURIC ACID AND INSTALLATION FOR CARRYING OUT SAID METHOD
PROCÉDÉ DE PRODUCTION D'ACIDE SULFURIQUE ET INSTALLATION POUR METTRE LEDIT PROCÉDÉ EN OEUVRE

(30) Priorität: 29.03.2007 DE 102007015137
(43) Veröffentlichungstag der Anmeldung: 23.12.2009
(73) Patentinhaber: ThyssenKrupp Industrial Solutions AG, 45143 Essen (DE)
(72) Erfinder: THIELERT, Holger, 44379 Dortmund (DE)
(74) Vertreter: Lorenz, Bernd Ingo Thaddeus
(86) Internationale Anmeldenummer: PCT/EP2008/002236
(87) Internationale Veröffentlichungsnummer: WO 2008/119474

(56) Entgegenhaltungen:
- DE-A1- 2 505 959
- US-A- 2 172 617
- US-A- 2 992 884
- US-A- 4 060 589
- US-A- 4 302 425

## Beschreibung

Die Erfindung betrifft ein Verfahren zur Schwefelsäureerzeugung, wobei in einer Schwefelsäuregewinnungsanlage ein SO₂-haltiges Rohgas hergestellt wird, das Rohgas durch mindestens einen Reaktionsbehälter geführt wird, in dem eine katalytische Reaktion von SO₂ zu SO ₃ erfolgt, und das dabei gebildete SO₃ in Schwefelsäure umgesetzt wird.

Das Rohgas kann durch Verbrennung oder katalytische Umsetzung von schwefelwasserstoffhaltigen Abgasen, die z. B. bei der Reinigung von Koksofengasen anfallen, erzeugt werden. Das Rohgas weist zumeist einen SO₂-Gehalt zwischen 3 und 12 Vol.% auf. Es wird in der Regel in einem Abhitzekessel abgekühlt und zur Einstellung eines überstöchiometrischen O₂/SO₂-Verhältnisses ggf. mit Luft verdünnt. Die exotherme Reaktion von SO₂ zu SO₃ erfolgt an Katalysatoren, z. B. V₂O₅-Katalysatoren, bei Temperaturen zwischen 400 und 650°C. Das hierbei gebildete SO₃ wird gekühlt und in einem Absorber in konzentrierter Schwefelsäure absorbiert. Als wesentliche Emissionen treten bei dem bekannten Verfahren, welches in der Literatur auch als Kontaktverfahren bezeichnet wird, SO₂ und in Form eines Schwefelsäurenebels SO₃ auf. Die SO₂-Emission resultiert aus einer unvollständigen Umsetzung von SO₂ zu SO₃. Nicht umgesetztes SO₂ wird lediglich in sehr geringem Maße im Absorber absorbiert. Die SO₂-Emission kann bis zu 3000 mg/Nm³ betragen, sofern nicht geeignete Maßnahmen zur Emissionsminderung ergriffen werden.

Es sind zahlreiche Maßnahmen zur SO₂-Emissionsminderung bekannt. Durch ein hohes O₂/SO₂-Verhältnis kann die Umsetzung von SO₂ durch ein allgemein niedrigeres Temperaturniveau thermodynamisch begünstigt werden. Durch den Einsatz Cäsium-dotierten Katalysatormaterials ist eine Verbesserung des Umsatzes und eine niedrigere SO₂-Emission erreichbar. Schließlich kann zur Verbesserung des Umsatzgrades die Zahl der Katalysatorstufen erhöht werden oder vor einer letzten Katalysatorstufe ein Zwischenabsorber vorgesehen werden. Durch die beschriebenen Maßnahmen erhöhen sich die Betriebskosten einer Schwefelsäuregewinnungsanlage jedoch zum Teil deutlich. Ferner sind die Maßnahmen verfahrenstechnisch und anlagentechnisch aufwendig und eignen sich zum Nachrüsten bestehender Schwefelsäuregewinnungsanlagen nur bedingt. Eine Übersicht über die bekannten Maßnahmen zur Minderung der SO₂-Emissionen in einer Schwefelsäuregewinnungsanlage gibt die Veröffentlichung H. Wiesenberger, "Stand der Technik in der Schwefelsäureerzeugung", Monographien, Band 137 (2001), Seiten 7 bis 23, ISBN 3-85457-583-1.

Gipssuspensionswäscher werden zur Abscheidung von SO₂ nach Kraftwerken, Abfallverbrennungsanlagen und Industrieanlagen eingesetzt, wobei hohe Abscheidegrade erreicht werden. In Kokereianlagen oder petrochemischen Anlagen, die eine nachgeschaltete Schwefelsäuregewinnungsanlage aufweisen, steht ein Gipssuspensionswäscher im Regelfall nicht zur Verfügung. In den H₂S-Wäscher einer Reinigungsanlage für Koksofengas oder entsprechende Gaswäscher in einer petrochemischen Anlage kann die SO₂-Emission nicht eingeleitet werden, da die entstehenden Salze die weiteren Stufen einer üblichen Koksgasreinigung bzw. entsprechende Einrichtungen in einer petrochemischen Anlage stören.

Aus der Druckschrift DE 26 58 208 A1 ist ein Verfahren zur Beseitigung von Schwefeloxiden aus einem bei der Verbrennung von Kohlenwasserstoffen entstandenen Abgas bekannt, bei dem in dem Abgas enthaltene Schwefeloxide in einer katalytischen Umwandlungszone zu Schwefelwasserstoff reduziert werden. Der Schwefelwasserstoff wird aus dem Abgasstrom extrahiert, so dass der gereinigte Abgasstrom nur geringe Mengen an Schwefel enthält.

Aus US 2 992 884 A ist es bekannt, Restgase aus der Schwefelsäureproduktion mit Wasserstoff zu reduzieren.

Bei einem aus DE 2 166 916 A1 bekannten Verfahren werden Abgase durch katalytische Hydrierung von Schwefel gereinigt, wobei das in den Abgasen enthaltende Schwefeldioxid unter Verwendung einer stöchiometrischen Menge von Wasserstoff in H₂S und nach Absorption in einer wässrigen alkalische Lösung in Schwefel umgewandelt wird.

Die Druckschrift US 4 919 912 A beschreibt ein Verfahren, bei dem ein SO₂-haltiger Gasstrom durch eine Reaktionszone geleitet wird, in der eine Claus-Reaktion abläuft und elementarer Schwefel gebildet wird. Da der Gasstrom eine für die Claus-Reaktion überstöchiometrische Menge an SO₂ enthält, wird das Abgas dieser Claus-Reaktion einer Hydrierungszone zugeführt, in der das überschüssige SO₂ zu Schwefelwasserstoff umgewandelt wird. Der Schwefelwasserstoff wird dem abströmenden Gas entzogen und wieder der Reaktionszone zugeführt, um zur Herstellung von Schwefel nach der Claus-Reaktion zur Verfügung zu stehen.

Die Druckschrift US 2 172 617 A beschreibt ein Verfahren zur Herstellung von Schwefelsäure, bei dem Schwefelwasserstoff aus einem Abgasstrom mit einem Überschuss an Sauerstoff zu Schwefeldioxid verbrannt wird. Das Gas wird gekühlt und in einen mit einem Katalysator gefüllten Kontaktreaktor geleitet, in dem die weitere Oxidation zu Schwefeltrioxid stattfindet. Von dort wird das schwefeltrioxidhaltige Gas in einen Kondensator geleitet, in dem Schwefelsäure gewünschter Konzentration kondensiert wird. Das Verfahren ist insbesondere für die Verarbeitung von Schwefelwasserstoff aus der Reinigung von KoksofenGasen zu Schwefelsäure geeignet, wobei sich auch die Möglichkeit des Wärmeaustausches zwischen beiden Verfahren als vorteilhaft erweist.

Der Erfindung liegt die Aufgabe zugrunde, die in einer Schwefelsäuregewinnungsanlage entstehende SO₂-Emission möglichst vollständig zu beseitigen. Insbesondere soll es möglich sein, bestehende Schwefelsäureanlagen in Kokereibetrieben und petrochemischen Anlagen unter Einbindung dort vorhandener Gaswäscher nachzurüsten. Bei der Planung von Neuanlagen soll das Verfahren dazu beitragen, dass konzentrierte Schwefelsäure mit hoher Ausbeute und energieeffizient hergestellt werden kann.

Gegenstand der Erfindung und Lösung dieser Aufgabe ist ein Verfahren zur Schwefelsäureerzeugung, wobei in einer Schwefelsäuregewinnungsanlage ein SO₂-haltiges Rohgas hergestellt wird, wobei das SO₂-haltige Rohgas durch Verbrennung oder katalytische Umsetzung von schwefelwasserstoffhaltigen Gasen, die insbesondere bei der Reinigung von Koksofengasen anfallen, erzeugt wird, das Rohgas durch mindestens einen Reaktionsbehälter geführt wird, in dem eine katalytische Reaktion von SO₂ zu SO₃ erfolgt sowie das gebildete SO₃ zu Schwefelsäure umgesetzt wird und dadurch gekennzeichnet, dass der die Schwefelsäuregewinnungsanlage mit einer SO₂-Emission verlassende Gasstrom in zwei Teilströme aufgeteilt wird, wobei ein erster Teilstrom in das SO₂-haltige Rohgas zurückgeführt wird und wobei ein zweiter Teilstrom zur Verminderung der SO₂-Emission des die Schwefelsäuregewinnungsanlage verlassenden SO₂-haltigen Gasstromes in einer Nachbehandlungsstufe mit einem H₂-reichen Gas hydriert wird und der durch die Hydrierung gebildete H₂S-haltige Gasstrom in den H₂S-Gaswäscher einer Koksofengasanlage oder petrochemischen Anlage geführt wird. Das erfindungsgemäße Verfahren eignet sich zum Nachrüsten bestehender Schwefelsäuregewinnungsanlagen in Kokereibetrieben und petrochemischen Anlagen und erlaubt gasseitig einen nahezu emissionsfreien Betrieb der Schwefelsäuregewinnungsanlage.

Sofern die Schwefelsäuregewinnungsanlage einem Kokereibetrieb zugeordnet ist, kann zur Hydrierung der SO₂-Emission Koksofengas verwendet werden. Ferner bietet es sich an, das durch Hydrierung gebildete H₂S-haltige Gas in die H₂S-Gaswäsche einer Reinigungsanlage für Koksofengas zurückzuführen.

Vorzugsweise wird der Gasstrom vor Eintritt in einen Hydrierreaktor durch Wärmeaustausch mit dem aus dem Hydrierreaktor austretenden Gasstrom vorgewärmt.

Das SO₂-haltige Rohgas kann durch Verbrennung oder katalytische Umsetzung von schwefelwasserstoffhaltigen Gasen, die insbesondere bei der Reinigung von Koksofengas anfallen, erzeugt werden. Erfindungsgemäß wird der die Schwefelsäuregewinnungsanlage mit einer SO₂-Emission verlassende Gasstrom in zwei Teilströme aufgeteilt, wobei ein erster Teilstrom in das SO₂-haltige Rohgas zurückgeführt wird und wobei der zweite Teilstrom der zuvor beschriebenen Nachbehandlungsstufe zugeführt und mit einem H₂-reichen Gas hydriert wird. Durch eine Teilrückführung des die Schwefelsäuregewinnungsanlage verlassenden Gasstromes in den SO₂-enthaltenden Rohgasstrom kann die Schwefelsäureausbeute verbessert werden. Die erfindungsgemäße Teilrückführung der SO₂-Emissionen in das Rohgas hat den weiteren Vorteil, dass ein geringerer Umsetzungsgrad der katalytischen Reaktion von SO₂ zu SO₃ toleriert werden kann, und zwar unter Beibehaltung eines guten Wirkungsgrades für die Schwefelsäuregewinnung. Durch die Rückführung eines Teils der SO₂-Emission in das Rohgas stellt sich im Rohgas ferner ein geringerer Wassergehalt ein, was die Aufkonzentrierung der Schwefelsäure begünstigt und zur Gewinnung einer hoch konzentrierten Schwefelsäure genutzt werden kann.

Eine weitere vorteilhafte Ausgestaltung des erfindungsgemäßen Verfahrens sieht vor, dass das SO₂-haltige Rohgas durch eine zweistufige Verbrennung von schwefelwasserstoffhaltigen Gasen erzeugt wird und dass der erste Teilstrom dem Rohgas vor den der zweiten Verbrennungsstufe zugeführt wird. Das durch die katalytische Umsetzung von SO₂ gebildete SO₃ wird zweckmäßig in einem Absorber in konzentrierter Schwefelsäure absorbiert.

Gegenstand der Erfindung ist auch eine Anlage nach Anspruch 6 zur Durchführung des Verfahrens. Die Ansprüche 7 und 8 beschreiben bevorzugte Ausgestaltungen dieser Anlage.

Im Folgenden wird die Erfindung anhand eines Ausführungsbeispiels erläutert. Es zeigen:
- Fig. 1: ein Verfahrensschema für die Schwefelsäureerzeugung, wobei zur Verminderung der SO₂-Emission eine Nachbehandlung des SO₂-haltigen Emissionsstroms durch Hydrierung stattfindet,
- Fig. 2: das in Fig. 1 dargestellte Verfahren mit einer erfindungsgemäßen Teilrückführung der SO₂-Emission in das SO₂-haltige Rohgas.

Vorausgesetzt wird eine Schwefelsäuregewinnungsanlage 1, in der zunächst ein SO₂-haltiges Rohgas 2 hergestellt wird. Das SO₂-haltige Rohgas 2 entsteht durch überstöchiometrische Verbrennung eines schwefelwasserstoffhaltigen Abgases 3, das mit einem Sauergasbestandteile enthaltenden Luftstrom 4 einem Verbrennungsofen 5 zugeführt wird. Im Ausführungsbeispiel ist ein Verbrennen in zwei aufeinander folgenden Brennkammern 6, 6' vorgesehen, wobei der Gasstrom zur Einstellung eines überstöchiometrischen O₂/SO-Verhältnisses ggf. mit Luft 7 verdünnt wird. Das heiße SO₂-Rohgas 2 wird in einem Abhitzekessel 8 abgekühlt und mehreren, in Reihe geschalteten Reaktionsbehältern 9 zugeführt, in denen eine exotherme Reaktion von SO₂ zu SO₃ an Katalysatoren, beispielsweise V₂O₅-Katalysatoren erfolgt. Zwischen den Stufen werden die Gase mit Wärmetauschern 10 auf die Eintrittstemperatur der nächsten katalytischen Stufe gekühlt. Es entsteht ein SO₃-reicher Gasstrom 11, der einem mit konzentrierter Schwefelsäure betriebenen Absorber 12 zugeführt wird. Dem Absorber 12 ist ein Flüssigkeitskreislauf 13 für die Schwefelsäure zugeordnet. Diese wird am Sumpf des Absorbers 12 abgezogen, gekühlt und am Kopf wieder aufgegeben. Das mit dem Gas zugeführte SO₂ wird in der konzentrierten Schwefelsäure absorbiert. Ein der absorbierten Menge entsprechender Teilstrom 14 der Schwefelsäure wird als Produktstrom ausgeschleust. Zur Einstellung der Schwefelsäurekonzentration kann dem Flüssigkeitskreislauf Wasser 15 zugeführt werden.

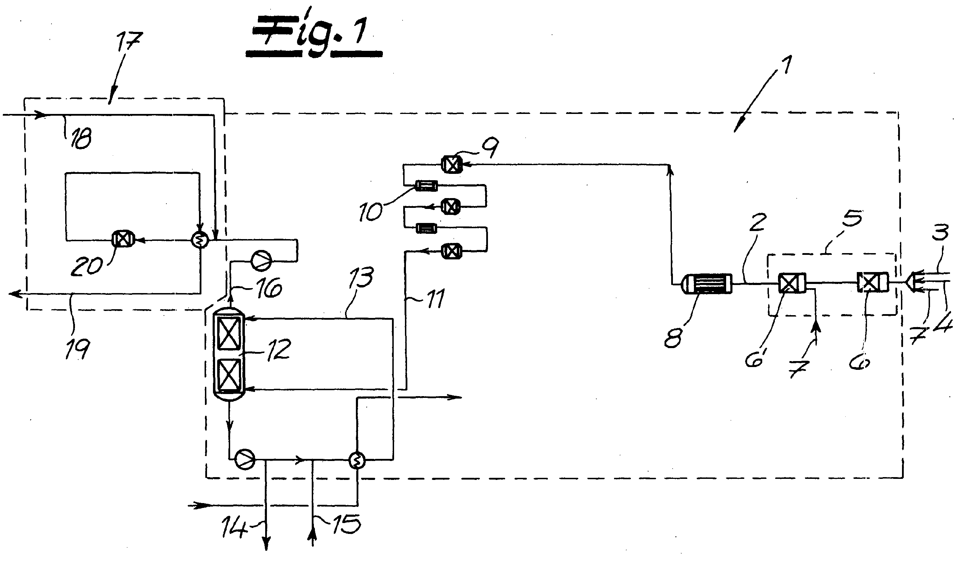

Der den Absorber 12 verlassende Gasstrom 16 enthält SO₂-Emissionen. Diese können, je nach Auslegung der katalytischen Stufen 9, bis zu 3000 mg/Nm³ betragen. Der die Schwefelsäuregewinnungsanlage 1 mit einer SO₂-Emission verlassende Gasstrom 16 wird bei dem in Fig. 1 dargestellten Verfahren in einer Nachbehandlungsstufe 17 mit einem H₂-reichen Gas 18 hydriert. Der durch die Hydrierung gebildete H₂S-haltige Gasstrom 19 wird in den Waschprozess einer der Schwefelsäuregewinnungsanlage 1 vorgeschalteten, nicht dargestellten Koksofengasanlage oder petrochemischen Anlage zurückgeführt.

Zur Hydrierung der SO₂-Emission wird Koksofengas verwendet, welches als Hauptbestandteile H₂, CH₄ sowie kleinere Mengen an CO, C_{N}H_{M} und CO₂ enthält. Das durch Hydrierung gebildete H₂S-haltige Gas 19 wird in die H₂S-Gaswäsche einer Reinigungsanlage für Koksofengas zurückgeführt.

Der Gasstrom 16 wird vor Eintritt in ein Hydrierreaktor 20 durch Wärmeaustausch mit dem aus dem Hydrierreaktor 20 austretenden Gasstrom vorgewärmt.

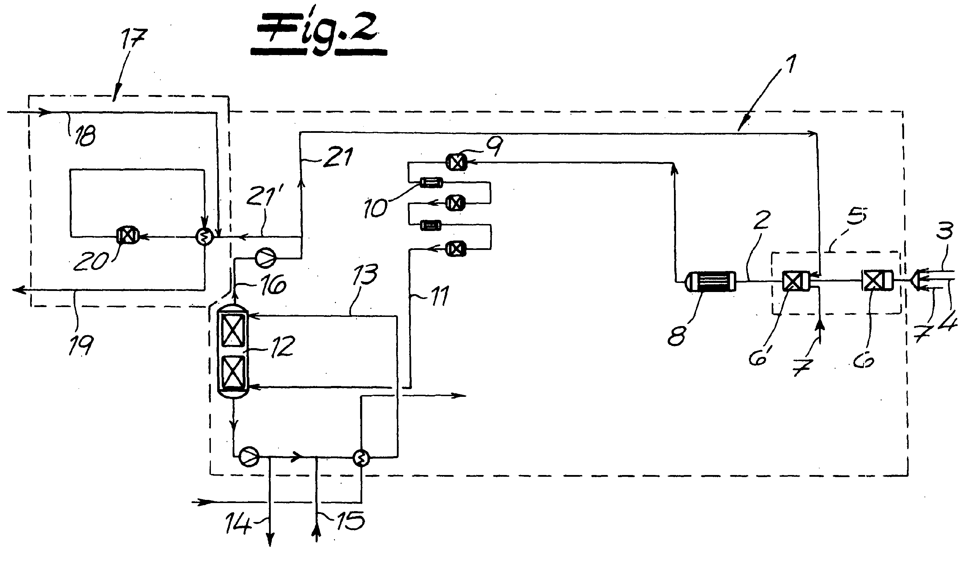

Die in Fig. 2 dargestellte erfindungsgemäße Verfahrensvariante unterscheidet sich von dem in Fig. 1 dargestellten Verfahren dadurch, dass der die Schwefelsäuregewinnungsanlage 1 mit einer SO₂-Emission verlassende Gasstrom 16 in zwei Teilströme 21, 21' aufgeteilt wird, wobei ein erster Teilstrom 21 in das SO₂-haltige Rohgas 2 zurückgeführt wird und wobei der zweite Teilstrom 21' in der Nachbehandlungsstufe 17 mit einem H₂-reichen Gas 18 hydriert wird. Im Ausführungsbeispiel gemäß einer bevorzugten Ausführung der Erfindung wird das SO₂-haltige Rohgas durch eine zweistufige Verbrennung von schwefelwasserstoffhaltigen Gasen erzeugt und wird der erste Teilstrom 21 dem Rohgas vor der zweiten Verbrennungsstufe 6' zugeführt.

Gegenstand der Erfindung ist auch eine Anlage zur Durchführung des beschriebenen Verfahrens.

## Patentansprüche

1. Verfahren zur Schwefelsäureerzeugung, wobei in einer Schwefelsäuregewinnungsanlage (1) ein SO₂-haltiges Rohgas (2) hergestellt wird, wobei das SO₂-haltige Rohgas (2) durch Verbrennung oder katalytische Umsetzung von schwefelwasserstoffhaltigen Gasen (3), die insbesondere bei der Reinigung von Koksofengasen anfallen, erzeugt wird, das Rohgas (2) durch mindestens einen Reaktionsbehälter (9) geführt wird, in dem eine katalytische Reaktion von SO₂ zu SO₃ erfolgt sowie das gebildete SO₃ zu Schwefelsäure umgesetzt wird und **dadurch gekennzeichnet, dass** der die Schwefelgewinnungsanlage (1) mit einer SO₂-Emission verlassende Gasstrom (16) in zwei Teilströme (21, 21') aufgeteilt wird, wobei ein erster Teilstrom (21) in das SO₂-haltige Rohgas (2) zurückgeführt wird und wobei ein zweiter Teilstrom (21') zur Verminderung der SO₂-Emission des die Schwefelsäuregewinnungsanlage (1) verlassenden SO₂-haltigen Gasstromes (16) in einer Nachbehandlungsstufe (17) mit einem H₂-reichen Gas (18) hydriert wird und der durch die Hydrierung gebildete H₂S-haltige Gasstrom (19) in den H₂S-Gaswäscher einer Koksofengasanlage oder petrochemischen Anlage geführt wird.

2. Verfahren nach Anspruch 1, **dadurch gekennzeichnet, dass** zur Hydrierung der SO₂-Emission Koksofengas verwendet wird.

3. Verfahren nach einem der Ansprüche 1 oder 2, **dadurch gekennzeichnet, dass** der Gasstrom vor Eintritt in einen Hydrierreaktor (20) durch Wärmeaustausch mit dem aus dem Hydrierreaktor (20) austretenden Gasstrom vorgewärmt wird.

4. Verfahren nach einem der Ansprüche 1 bis 3, **dadurch gekennzeichnet, dass** das SO₂-haltige Rohgas (2) durch eine zweistufige Verbrennung von schwefelwasserstoffhaltigen Gasen (3) erzeugt wird und dass der erste Teilstrom (21) dem Rohgas (2) vor der zweiten Verbrennungsstufe (6') zugeführt wird.

5. Verfahren nach einem der Ansprüche 1 bis 4, **dadurch gekennzeichnet, dass** das durch die katalytische Umsetzung von SO₂ gebildete SO₃ in einem Absorber (12) in konzentrierter Schwefelsäure absorbiert wird.

6. Anlage zur Durchführung des Verfahrens nach einem der Ansprüche 1 bis 5, mit einer Schwefelsäuregewinnungsanlage (1) zur Erzeugung eines SO₂-haltigen Rohgases (2) durch Verbrennung oder katalytische Umsetzung von schwefelwasserstoffhaltigen Gasen (3), wobei die Schwefelsäuregewinnungsanlage (1) mindestens einen Reaktionsbehälter (9) für eine katalytische Reaktion des SO₂ zu SO₃ aufweist und einen mit schwefelsäurebetriebenen Absorber (12) aufweist,
wobei die Anlage mit der Maßgabe ausgelegt ist, dass der die Schwefelgewinnungsanlage (1) mit einer SO₂-Emission verlassende Gasstrom (16) in zwei Teilströme (21, 21') aufteilbar ist, wobei ein erster Teilstrom (21) in das SO₂-haltige Rohgas (2) zurückführbar ist,
wobei eine Nachbehandlungsstufe (17) vorgesehen ist, der ein zweiter Teilstrom (21') des die Schwefelsäuregewinnungsanlage (1) verlassenden Gasstromes (16) zuführbar ist,
wobei die Nachbehandlungsstufe (17) mit einem H₂-reichen Gas beaufschlagten Hydrierreaktor (20) zur Hydrierung der SO₂-Emission des zugeführten zweiten Teilstromes (21') aufweist und wobei der durch die Hydrierung gebildete H₂S-haltige Gasstrom (19) einem Gaswäscher zuführbar ist, der an die Nachbehandlungsstufe (17) angeschlossen ist, wobei der Gaswäscher Bestandteil einer Reinigungsanlage für Koksofengas ist.

7. Anlage nach Anspruch 6, **dadurch gekennzeichnet, dass** die Nachbehandlungsstufe (17) einen Wärmeaustauscher aufweist, um den zweiten Teilstrom (21') vor Eintritt in den Hydrierreaktor (20) durch Wärmeaustausch mit dem aus dem Hydrierreaktor (20) austretenden Gasstrom vorzuwärmen.

8. Anlage nach Anspruch 6 oder 7, **dadurch gekennzeichnet, dass** die Schwefelsäuregewinnungsanlage (1) einen Verbrennungsofen (5) aufweist in dem ein SO₂-haltiges Rohgas (2) durch Verbrennung oder katalytische Umsetzung von schwefelwasserstoffhaltigen Gasen erzeugt wird, und dass eine Rückführungseinrichtung vorgesehen ist, durch die ein Teilstrom (21) des die Schwefelsäuregewinnungsanlage mit einer SO₂-Emission verlassenden Gasstromes in das SO₂-haltige Rohgas zurückführbar ist.

## Claims

1. A method for producing sulphuric acid, wherein a SO₂-containing raw gas (2) is produced in a sulphuric acid producing plant (1), wherein the SO₂-containing raw gas (2) is produced through the combustion or catalytic conversion of hydrogen sulphide-containing gases (3) occurring in particular, during the cleaning of coke oven gases, the raw gas (2) is passed through at least one reaction container (9), in which a catalytic reaction from SO₂ to SO₃ takes place, and the SO₃ thus formed is converted into sulphuric acid, and **characterised in that** the gas current (16), which leaves the sulphuric acid producing plant (1) with a SO₂ emission, is divided into two partial currents (21, 21'), wherein the first partial current (21) is returned into the SO₂-containing raw gas (2) and wherein a second partial current (21') for reducing the SO₂ emission of the SO₂-containing gas current (16) leaving the sulphuric acid producing plant (1) is hydrogenated with a H₂-rich gas (18) in a post-treatment step (17), and the H₂S-containing gas current (19) formed as a result of the hydrogenation is fed into the H₂S gas scrubber of a coke oven gas plant or petrochemical plant.

2. The method according to claim 1, **characterised in that** coke oven gas is used for the hydrogenation of the SO₂ emission.

3. The method according to one of claims 1 or 2, **characterised in that** the gas current prior to entry into a hydrogenation reactor (20) is pre-heated due to a heat exchange with the gas current leaving the hydrogenation reactor (20).

4. The method according to one of claims 1 to 3, **characterised in that** the SO₂-containing raw gas (2) is produced by a two-stage combustion of hydrogen sulphide-containing gases (3) and **in that** the first partial current (21) is fed into the raw gas (2) ahead of the second combustion step (6').

5. The method according to one of claims 1 to 4, **characterised in that** the SO₃ formed through the catalytic conversion of SO₂ is absorbed in an absorber (12) in concentrated sulphuric acid.

6. A plant for performing the method according to one of claims 1 to 5, with a sulphuric acid producing plant (1) for the production of a SO₂-containing raw gas (2) through the combustion or catalytic conversion of hydrogen sulphide-containing gases (3), wherein the sulphuric acid producing plant (1) comprises at least one reaction container (9) for a catalytic reaction from SO₂ to SO₃ and a sulphuric acid-operated absorber (12),
wherein the plant is designed with the proviso that the gas current (16) leaving the sulphuric acid producing plant (1) with a SO₂ emission can be divided into two partial currents (21, 21'), wherein a first partial current (21) can be returned into the SO₂-containing raw gas (2),
wherein a post-treatment step (17) is provided to which a second partial current (21') of the gas current (16) leaving the sulphuric acid producing plant (1) can be admitted,
wherein the post-treatment step (17) comprises a hydrogenation reactor (20) acted upon by a H₂-rich gas for the hydrogenation of the SO₂ emission of the admitted second partial current (21'), and wherein the H₂S-containing gas current (19) formed due to hydrogenation can be fed into a gas scrubber connected to the post-treatment step (17), wherein the gas scrubber is part of a cleaning plant for coke oven gas.

7. The plant according to claim 6, **characterised in that** the post treatment step (17) comprises a heat exchanger in order to pre-heat the second partial current (21') prior to entry into the hydrogenation reactor (20) due to a heat exchange with the gas current leaving the hydrogenation reactor (20).

8. The plant according to claim 6 or 7, **characterised in that** the sulphuric acid producing plant (1) comprises a combustion oven (5), in which a SO₂-containing raw gas (2) is produced due to combustion or catalytic conversion of hydrogen sulphide-containing gases, and **in that** a returning facility is provided, through which a partial current (21) of the gas current leaving the sulphuric acid producing plant with an SO₂-emission can be returned into the SO₂-containing raw gas.

## Revendications

1. Procédé pour la production d'acide sulfurique, dans lequel, dans une installation de production d'acide sulfurique (1), un gaz brut (2) contenant du SO₂ est produit, dans lequel le gaz brut contenant du SO₂ (2) est produit par combustion ou réaction catalytique de gaz (3) contenant de l'acide sulfhydrique qui apparaissent en particulier lors du nettoyage de gaz de cokerie, le gaz brut (2) étant conduit à travers au moins un récipient de réaction (9) dans lequel une réaction catalytique de SO₂ en SO₃ a lieu, et le SO₃ formé étant transformé en acide sulfurique, et **caractérisé en ce que** le flux de gaz (16) quittant l'installation de production d'acide sulfurique (1) avec une émission de SO₂ est partagé en deux flux partiels (21, 21'), dans lequel un premier flux partiel (21) est reconduit dans le gaz brut contenant du SO₂ (2) et dans lequel un deuxième flux partiel (21') est hydrogéné avec un gaz riche en H₂S (18) pour réduire l'émission de SO₂ du flux de gaz contenant du SO₂ (16) quittant l'installation de production d'acide sulfurique (1) dans un étage de traitement ultérieur (17), et le flux de gaz contenant du H₂S (19) formé par l'hydrogénation étant conduit dans le laveur de gaz H₂S d'une installation de gaz de cokerie ou d'une installation pétrochimique.

2. Procédé selon la revendication 1, **caractérisé en ce que** l'on utilise du gaz de cokerie pour l'hydrogénation de l'émission de SO₂.

3. Procédé selon l'une des revendications 1 ou 2, **caractérisé en ce qu'**avant l'entrée dans un réacteur d'hydrogénation (20), le flux de gaz est préchauffé par échange de chaleur avec le flux de gaz sortant du réacteur d'hydrogénation (20).

4. Procédé selon l'une des revendications 1 à 3, **caractérisé en ce que** le gaz brut contenant du SO₂ (2) est produit grâce à une combustion en deux phases de gaz contenant de l'acide sulfhydrique (3) et **en ce que** le premier flux partiel (21) est amené au gaz brut (2) avant la deuxième phase de combustion (6').

5. Procédé selon l'une des revendications 1 à 4, **caractérisé en ce que** le SO₃ formé grâce à la réaction catalytique de SO₂ est absorbé dans de l'acide sulfurique concentré dans un absorbeur (12).

6. Installation pour mettre en oeuvre le procédé selon l'une des revendications 1 à 5, avec une installation de production d'acide sulfurique (1) pour la production d'un gaz brut contenant du SO₂ (2) par combustion ou réaction catalytique de gaz contenant de l'acide sulfhydrique (3), dans laquelle l'installation de production d'acide sulfurique (1) présente au moins un récipient de réaction (9) pour une réaction catalytique du SO₂ en SO₃ et un absorbeur (12) fonctionnant avec de l'acide sulfurique,
dans laquelle l'installation est étudiée avec pour consigne que le flux de gaz (16) quittant l'installation de production d'acide sulfurique (1) avec une émission de SO₂ puisse être partagé en deux flux partiels (21, 21'), dans laquelle un premier flux partiel (21) peut être reconduit dans le gaz brut contenant du SO₂ (2),
un étage de traitement ultérieur (17) étant prévu, auquel il est possible d'amener un deuxième flux partiel (21') du flux de gaz (16) quittant l'installation de production d'acide sulfurique (1),
dans laquelle l'étage de traitement ultérieur (17) présente un réacteur d'hydrogénation (20) alimenté par un gaz riche en H₂ pour l'hydrogénation de l'émission de SO₂ du deuxième flux partiel (21') amené, et dans laquelle le flux de gaz contenant du H₂S (19) produit par l'hydrogénation peut être amené à un laveur de gaz qui est raccordé à l'étage de traitement ultérieur (17), dans laquelle le laveur de gaz est un élément constitutif d'une installation de nettoyage pour du gaz de cokerie.

7. Installation selon la revendication 6, **caractérisée en ce que** l'étage de traitement ultérieur (17) présente un échangeur de chaleur pour préchauffer le deuxième flux partiel (21') avant l'entrée dans le réacteur d'hydrogénation (20) grâce à un échange de chaleur avec le flux de gaz sortant du réacteur d'hydrogénation (20).

8. Installation selon la revendication 6 ou 7, **caractérisée en ce que** l'installation de production d'acide sulfurique (1) présente un four de combustion (5) dans lequel un gaz brut contenant du SO₂ (2) est produit par combustion ou réaction catalytique de gaz contenant de l'acide sulfhydrique, et **en ce que** l'on prévoit un dispositif de reconduite grâce auquel un flux partiel (21) du flux de gaz quittant l'installation de production d'acide sulfurique avec une émission SO₂ peut être reconduit dans le gaz brut contenant du SO₂.
